# EUROPEAN PATENT SPECIFICATION

(11) **EP 0 285 379 B1**
(45) Date of publication and mention of the grant of the patent: **13.10.1993**
(21) Application number: 88302801.1
(22) Date of filing: 29.03.1988
(51) Int. Cl.: B60S 1/38

(54) **Yoke or lever for the harness of a windscreen wiper blade**
Bügel oder Hebel für Scheibenwischerblattgestell
Joug ou levier pour la monture d'un balai d'essuie-glace

(30) Priority: 30.03.1987 GB 8707567
(43) Date of publication of application: 05.10.1988
(73) Proprietor: TRICO FOLBERTH LIMITED, Brentford, Middlesex TW8 9HP (GB)
(72) Inventor: Pethers, Peter Cecil, Winkfield Berkshire (GB)
(74) Representative: Pedder, James Cuthbert

(56) References cited:
- EP-A- 0 012 251
- WO-A-82/00982
- DE-B- 1 104 840
- DE-B- 1 269 517

## Description

This invention relates to a yoke or lever for a windscreen wiper blade harness and is applicable to a yoke or lever having a claw arrangement at at least one end thereof.

It has been found useful in modern windscreen wiper blades to provide a relatively streamlined shape for the blade so that it has an aesthetically pleasing appearance, as well as having improved performance at high speed. This however provides problems in securing the ends of the wiper rubbers to the ends of the appropriate yokes or levers if the yokes or levers are not to depart significantly from the general lines of the rest of the windscreen wiper blade. Further problems are also created by the fact that, in modern blade technology, there is a tendency to use rubbers which are capable of being formed by an extrusion process. While it is possible to secure the blade rubbers to the harness of a windscreen wiper by means of various forms of clips, these clips are of complicated design and are difficult to use where moulded rubbers are replaced by extruded ones.

A proposal has been made in EP-A-0012251 in which the blade rubber is located in the region of holding claws by means of a projection which extends downwardly from the base of the claw arrangement and extends into a depression in the upper surface of the blade rubber. However, such an arrangement does not lend itself either to the shape of modern streamlined blades nor with the use of extruded blade rubbers.

The present invention seeks to provide a yoke or lever for a windscreen wiper blade harness in which some or all of the above disadvantages are reduced or substantially obviated.

According to the invention, a yoke or lever for a windscreen wiper blade harness comprises a member of substantially channel-shaped cross-section having a claw arrangement at at least one end thereof, the claw arrangement comprising a pair of opposed claw elements extending inwardly of the channel section from the mouth region thereof for engaging in slots in a blade rubber, one or more inwardly directed projections extending from and carried by the base of the channel and being substantially aligned, in the longitudinal direction of the yoke or lever, with the two claw elements for engaging the upper edge of the blade rubber, characterised in that the channel of the yoke or lever is constructed such that the base of the channel in the region of the claw arrangement will be spaced from the blade rubber and the one or more inwardly directed projections is/are adapted to bridge the space between the base of the channel and the blade rubber, the channel of the yoke or lever extending beyond the claw arrangement and being closed at its end to form a shroud for the end of the blade rubber
In one form of embodiment of the invention, the projection or projections are formed by indenting the base of the channel of the yoke or lever. In a second form of the invention, the projection or projections are formed by means of inserts inserted into an aperture or aperture in the base of the channel of the yoke or lever
The invention will now be described in greater detail, by way of example with reference to the drawings, in which:-
Figure 1 is a perspective view of one end of a yoke or lever of a windscreen wiper in accordance with the invention:
Figure 2 is a sectional view taken on the line II-II of figure 1;
Figure 3 is a longitudinal sectional view of the end of the yoke or lever taken on the line III-III of figure 2 but with the blade rubber shown unsectionalised:
Figure 4 is a view similar to figure 1 but showing a different form of indentation to that shown in figure 1;
Figure 5 is an exploded view of a two-part yoke end using a projection formed by an insert, and
Figure 6 is a sectional view taken on the lines VI-VI of figure 5.

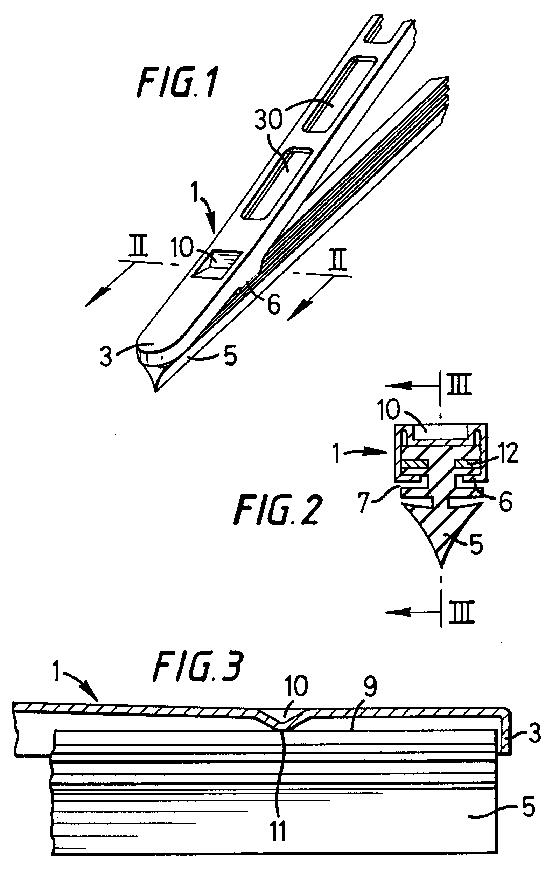

Referring firstly to figures 1 to 3, there is shown one end of a secondary lever or yoke 1 of a windscreen wiper harness, which end is adapted to constrain the end of the blade rubber 5 of the wiper blade. In normal circumstances, both ends of the windscreen wiper blade would be terminated in the same way.

For this purpose, the end of the secondary yoke or lever 1 is of channel-shaped cross-section and is terminated with a closed end portion 3 which extends around the upper end of the blade rubber 5 so as to provide a shroud therefor and prevent longitudinal movement of the rubber 5 past the end of the yoke or lever 1 as is best seen in figure 3. Towards the end of the yoke or lever 1, there is provided a pair of opposed claws 6 which depend from the channel sides of the yoke or lever 1 in the region of the mouth of the channel.

In the normal arrangement of claws on a yoke or lever, the claw is provided with an upper portion which engages the blade rubber so as to hold the blade rubber securely between this portion and the claws which seat in a longitudinal slot 7 in the blade rubber 5.

In the present instance, due to the shaping of the yoke or lever 1, the smooth formation of the lever would be totally upset if a standard claw was provided and furthermore there would then be difficulties in providing the necessary shroud for the end of the blade rubber. Thus, in this embodiment of invention, the necessary contact with the upper surface 9 of the rubber 5 is achieved by providing a central indentation 10 in the upper surface of the yoke or lever 1, whereby a downwardly depending projection 11 is formed in the interior of the channel of the yoke or lever 1 and, in this way, the blade rubber 5 can be accurately located between the claws 6 and the projection 11 while permitting the necessary longitudinal movement of the blade rubber 5 in the claw so as to allow for the shape of the windscreen which is to be wiped, as is usual in blades having a multi yoke or lever harness.

It will be observed that with the design shown, the blade rubber 5 can be readily of an extruded type, no limited slots or indents being required to enable the rubber to be held in place as is often the case with moulded blade rubbers. In the particular form shown, the blade rubber 5 has a twin rail vertebra 12 but it will be appreciated that the invention could be applied to other forms of blade rubber having different types of verbebra.

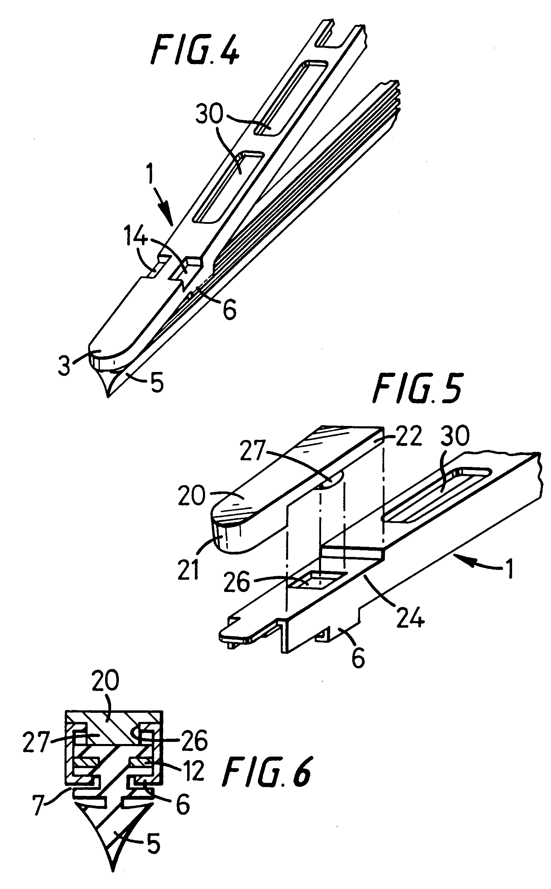

Figure 4 shows a second form of the yoke or lever 1 in accordance with the invention. In this embodiment, the central indentation is replaced by a pair of transversely spaced indentations 14 which have a similar effect to the indentation 10 with regard to locating the blade rubber 5.

Figures 5 and 6 show a different version of the ending of the yoke or lever 1. In this case, the shrouded end of the yoke or lever 1 is provided by a plastics moulding 20 which has a stepped construction with the larger part 21 providing an extension of the yoke or lever 1 itself and the smaller part 22 being arranged to lay in a reduced height portion 24 of the yoke or lever 1 so that the plastics member 20 forms a flush extension to the end of the yoke or lever 1. The end of the yoke or lever 1 has an extension 25 which fits into a pocket (not shown) in the moulding 21. With this construction, the upper surface of the reduced height portion 24 of the yoke or lever 1 is apertured at 26 to receive a projection 27, the projection 27 passing through the aperture 26 and forming a projection within the channel of the yoke or lever which is the equivalent of the projection 11 shown in the first embodiment. By suitable shaping of the projection 27, the projection 27 can be snap fitted into the aperture 26 after the plastics member has been slid onto the extension 25 so that the plastics member 20 is secured onto the end of the yoke or lever 1.

It will be appreciated that various modifications and alterations may be made to the above described embodiments without departing from the scope of the invention. For example, the exact form of the yoke or lever is not important as far as the invention is concerned and the type of yoke or lever having base apertures 30 as shown in the drawings can be replaced by one which has no apertures. The sides of the yoke may be of variable height i.e. one side of the yoke or lever may be longer or deeper than the other one so as to improve the performance of the windscreen wiper and reduce the lift applied to the windscreen wiper by air flow at high speeds. The projection 11 which has been shown effectively as a knife edge type allowing for pivoting of the blade rubber thereabout could be replaced by a projection of any other suitable shape which will allow appropriate movement of the blade rubber. Thus it could have a curved shape.

In the embodiment of figure 5 and 6, while it is desirsble that the plastics member 20 shall be flush with the clawed yoke or lever, it may be desirable for certain manufacturing reasons not to provide the reduced height portion 24 of the yoke or lever, in which case, the portion 22 could be made thinner and could lie on top of the clawed yoke or lever without effecting the performance or visual aspect of the windscreen wiper blabe to any marked degree.

From the above it will be seen that the embodiment described provides a form of yoke or lever which is of simple construction as regards provision of claws and which can be used satisfactorily with either extruded or moulded blade rubbers.

## Claims

1. A yoke or lever for a windscreen wiper blade harness comprising a member (1) of substantially channel-shaped cross-section having a claw arrangement at at least one end thereof, the claw arrangement comprising a pair of opposed claw elements (6) extending inwardly of the channel-section from the mouth region thereof for engaging in slots (7) in a blade rubber (5), one or more inwardly directed projections (10, 11, 14, 27) extending from and carried by the base of the channel and being substantially aligned, in the longitudinal direction of the yoke or lever, with the two claw elements for engaging the upper edge (9) of the blade rubber (5), characterised in that the channel of the yoke or lever is constructed such that the base of the channel in the region of the claw arrangement will be spaced from the blade rubber (5) and the one or more inwardly directed projections (10, 11, 14, 27) is /are adapted to bridge the space between the base of the channel and the blade rubber (5), the channel of the yoke or lever extending beyond the claw arrangement and being closed at its end (3) to form a shroud for the end of the blade rubber

2. A yoke or lever as claimed in claim 1, characterised in that the projection or projections (11, 14) are formed by indenting the base of the channel of the yoke or lever (1).

3. A yoke or lever as claimed in claim 2, characterised in that a single indentation (10) is formed centrally of the base of the channel.

4. A yoke or lever as claimed in claim 2, characterised in that two indentations (14), spaced transversely apart are formed in the base of the channel.

5. A yoke or lever as claimed in claim 1, characterised in that the projection or projections (27) are formed by means of inserts inserted into an aperture or apertures (26) in the base of the channel of the yoke or lever (1).

## Patentansprüche

1. Bügel oder Hebel für ein Scheibenwischerblattgestänge mit einem im Querschnitt wesentlichen rinnenförmigen Element (1), das an zumindest seinem einen Ende eine Greifvorrichtung besitzt, die ein Paar einander gegenüberliegender Greifelemente (6) aufweist, die sich im Öffnungsbereich der Rinne nach innen erstrecken, um in Aussparungen (7) eines Wischergummis (5) einzugreifen, wobei ein oder mehrere nach innen gerichtete Vorsprünge (10,11,14,27) sich von der sie haltenden Basis der Rinne erstrecken, die in Längsrichtung des Bügels oder Hebels im wesentlichen zu den zwei Greifelementen ausgerichtet sind, um die Oberkante (9) des Wischergummis (5) zu halten, dadurch gekennzeichnet, daß die Rinne des Bügels oder Hebels derart ausgebildet ist, daß die Basis der Rinne im Bereich der Greifvorrichtung in einem Abstand zum Wischerblatt (5) angeordnet ist und daß einer oder mehrere der nach innen gerichteten Vorsprünge (10,11,14,27) den Abstand zwischen der Basis der Rinne und dem Wischergummi (5) überbrücken, wobei die Rinne des Bügels oder Hebels sich über die Greifvorrichtung hinaus erstreckt und an ihrem Ende (3) verschlossen ist, um eine Verkleidung für das Wischergummiende zu bilden.

2. Bügel oder Hebel nach Anspruch 1, dadurch gekennzeichnet, daß der Vorsprung oder die Vorsprünge (11,14) durch Einkerben bzw. Eindrücken der Basis der Rinne des Bügels oder des Hebels (1) ausgebildet sind.

3. Bügel oder Hebel nach Anspruch 2, dadurch gekennzeichnet, daß eine einzelne Einkerbung (10) zentral in der Basis der Rinne ausgebildet ist.

4. Bügel oder Hebel nach Anspruch 2, dadurch gekennzeichnet, daß zwei in Querrichtung mit Abstand zueinander angeordnete Einkerbungen (14) in der Basis der Rinne ausgebildet sind.

5. Bügel oder Hebel nach Anspruch 1, dadurch gekennzeichnet, daß der Vorsprung oder die Vorsprünge (27) durch Einsätze, gebildet sind, welche in eine Öffnung oder Öffnungen (26) in der Basis der Rinne des Hebels oder Bügels (1) eingesetzt sind.

## Revendications

1. Un étrier ou levier pour une monture d'un balai d'essuie-glace comprenant un élément (1) à section transversale sensiblement en forme de canal pourvu d'un agencement de griffes à au moins l'une de ses extrémités, l'agencement de griffes comprenant une paire d'éléments opposés (6) de griffes s'étendant vers l'intérieur de la section en canal à partir de la région de débouché de celui-ci pour pénétrer dans des fentes (7) d'un caoutchouc (5) de balai, une ou plusieurs saillies dirigées vers l'intérieur (10, 11, 14, 27) s'étendant à partir de la base du canal et portées par la base du canal, et qui sont sensiblement alignées, dans la direction longitudinale de l'étrier ou levier, avec les deux éléments de griffes prévus pour venir en prise sur le bord supérieur (9) du caoutchouc (5) de balai, caractérisé en ce que le canal de l'étrier ou levier est d'une structure telle que la base du canal dans la région de l'agencement de griffes est espacée du caoutchouc (5) de balai et la ou les saillies dirigées vers l'intérieur (10, 11, 14, 27) est/sont aptes à chevaucher l'espace entre la base du canal et le caoutchouc (5) de balai, le canal de l'étrier ou levier s'étendant au-delà de l'agencement de griffes et étant fermé à son extrémité (3) afin de former un berceau pour l'extrémité du caoutchouc de balai.

2. Un étrier ou levier selon la revendication 1, caractérisé en ce que la saillie ou les saillies (11, 14) sont formées en découpant la base du canal de l'étrier ou du levier (1).

3. Un étrier ou levier selon la revendication 2, caractérisé en ce qu'une découpe unique (10) est formée au centre de la base du canal.

4. Un étrier ou levier selon la revendication 2, caractérisé en ce que deux découpes (14), espacées transversalement l'une de l'autre, sont formées dans la base du canal.

5. Un étrier ou levier selon la revendication 1, caractérisé en ce que la saillie ou les saillies (27) sont formées au moyen d'inserts insérés dans une ouverture ou des ouvertures (26) dans la base du canal de l'étrier ou du levier (1).
